# EUROPÄISCHE PATENTSCHRIFT

(11) **EP 3 676 111 B1**
(45) Veröffentlichungstag und Bekanntmachung des Hinweises auf die Patenterteilung: **27.01.2021**
(21) Anmeldenummer: 18765372.0
(22) Anmeldetag: 24.08.2018
(51) Int. Cl.: B60D 1/36, B60D 1/01, B60D 1/62, B60W 40/00

(54) **ANHÄNGER-STEUERVORRICHTUNG ZUM MONTIEREN AN EINEM ANHÄNGER**
TRAILER CONTROLLER FOR ASSEMBLING ON A TRAILER
DISPOSITIF DE COMMANDE DE REMORQUE CONÇU POUR ÊTRE MONTÉ SUR UNE REMORQUE

(30) Priorität: 31.08.2017 DE 102017119969
(43) Veröffentlichungstag der Anmeldung: 08.07.2020
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2018/072841
(87) Internationale Veröffentlichungsnummer: WO 2019/042874

(56) Entgegenhaltungen:
- EP-A2- 3 081 405
- WO-A1-2017/100716
- DE-U1-202013 008 221

## Beschreibung

Die vorliegende Erfindung betrifft eine Anhänger-Steuervorrichtung zum Montieren an einen Anhänger, einen Anhänger mit einer Anhänger-Steuervorrichtung sowie ein Ankupplungssystem mit einer Zugmaschine und einem Anhänger. Ferner betrifft die vorliegende Erfindung ein Verfahren zum Durchführen eines Kupplungsprozesses zwischen einer Zugmaschine und einem Anhänger.

Einparksysteme zur Unterstützung eines Einparkprozesses eines Zugfahrzeuges mit einem Anhänger sind bereits bekannt. Allerdings ist der Anhänger für den Einparkprozess bereits an dem Zugfahrzeug angekoppelt. Die bereits bekannten Einparksysteme betreffen folglich das Einparken eines Anhängers, welcher bereits an einem Zugfahrzeug angekoppelt ist. Nicht bekannt ist, wie das Ankuppeln eines Zugfahrzeuges bzw. einer Zugmaschine an einen Anhänger unterstützt werden kann.

Die WO 2017/100716 A1 betrifft ein autonomes Docksystem für ein Fahrzeug, umfassend ein Kontrollsystem zum Entgegennehmen einer Anforderung für die Implementierung einer automatischen Dockroutine.

Die DE 20 2013 008 221 U1 betrifft eine Kupplungseinrichtung zum Anbringen an der Zugvorrichtung eines KFZ-Anhängerfahrzeuges, mit einem Gehäuse, das sich entlang einer Längsachse erstreckt.

Die EP 3 081 405 A2 betrifft ein Kupplungsassistenzsystem für Fahrzeuge umfassend eine Kamera, die an der Rückseite eines Fahrzeugs befestigt ist.

Der vorliegenden Erfindung liegt daher die Aufgabe zugrunde, eine Vorrichtung bereit zu stellen, um einen Ankupplungsprozess zwischen einer Zugmaschine und einem Anhänger zu unterstützen, insbesondere auch automatisch durchführbar zu machen. Ferner liegt der vorliegenden Erfindung die Aufgabe zugrunde, einen Anhänger bereit zu stellen, welcher automatisch ankuppelbar ist, und ein Ankupplungssystem umfassend eine Zugmaschine und einen Anhänger bereitzustellen, mit dem ein automatischer Ankupplungsprozess durchführbar ist. Ferner liegt der vorliegenden Erfindung die Aufgabe zugrunde, ein Verfahren zum Durchführen eines solchen Kupplungsprozesses bereitzustellen.

Die vorliegenden Aufgaben werden gelöst mit einer Anhänger-Steuervorrichtung nach Anspruch 1, einem Anhänger mit einer Ansteuervorrichtung nach Anspruch 6, einem Ankupplungssystem umfassend eine Zugmaschine und einen Anhänger gemäß Anspruch 12 sowie einem Verfahren zum Durchführen eines Kupplungsprozesses zwischen einer Zugmaschine und einem Anhänger mit einem Ankupplungssystem nach Anspruch 15.

Vorliegend wird eine Anhänger-Steuervorrichtung zum Montieren an einen Anhänger vorgeschlagen, wobei die Anhänger-Steuervorrichtung zur Bestimmung einer aktuellen Position und einer Ausrichtung mindestens eine Positions-Bestimmungseinheit aufweist. Die Positions-Bestimmungseinheit ist dazu ausgebildet, eine aktuelle Position mindestens zweier an einem Anhänger vorgegebene Bereiche bzw. Abschnitte bzw. Positionen zu erfassen, um eine Ausrichtung der Anhänger-Steuervorrichtung in Relation zu einem Anhänger und/oder eine Ausrichtung des Anhängers selbst, insbesondere an welchem die Anhänger-Steuervorrichtung montiert ist, zu bestimmen. Die Positions-Bestimmungseinheit ist dazu ausgebildet, eine aktuelle Position mindestens zweier vorgegebener Bereiche mittels Funkwellen, wie beispielsweise mittels globaler Positionsbestimmungsmittel, wie z.B. insbesondere GPS, oder dergleichen, abzufragen. Mit dem Begriff "aktuelle Position einer vorgegebenen Position bzw. eines vorgegebenen Bereichs" kann vorliegend gemeint sein, dass eine vorgegebene Position bzw. ein vorgegebener Bereich an einem Anhänger oder an oder in einer Anhänger-Steuervorrichtung per se fest vorgegeben ist, der Anhänger bzw. die Anhänger-Steuervorrichtung jedoch bewegt werden können, so dass sich die aktuelle Position, bzw. deren Koordinaten in Bezug auf die Erdoberfläche verändern. Daher ist es vorliegend von Bedeutung eine aktuelle Position eines vorgegebenen Bereichs zu erfassen, d.h. die aktuellen, insbesondere globalen, Koordinaten des vorgegebenen Bereichs. Zur Bestimmung einer aktuellen Position der Anhänger-Steuervorrichtung und einer aktuellen Ausrichtung der Anhänger-Steuervorrichtung, werden bevorzugt die Positionen mindestens zweier beabstandeter vorgegebener Bereiche, an welchen jeweils eine Sende- und Empfängereinheit angeordnet sein kann, ermittelt und zur Auswertung der Orientierung, d. h. der Ausrichtung des Anhängers und/oder der Anhänger-Steuervorrichtung, herangezogen. Die Bestimmung der Ausrichtung des Anhängers und/oder der Anhänger-Steuervorrichtung kann mit zwei Positionsbestimmungen oder mehreren Positionsbestimmungen erfolgen. Werden beispielsweise zwei Positionsbestimmungen ermittelt, so wird anhand einer Geraden durch diese beiden Bereiche die Ausrichtung der Anhänger-Steuervorrichtung bzw. eines Anhängers, an dem die Anhänger-Steuervorrichtung angeordnet ist, ermittelt. Werden hingegen drei Positionsbestimmungen zur Ermittlung der Ausrichtung verwendet, so kann beispielsweise durch die ermittelten Positionen eine Ebene gelegt, d. h. ermittelt, werden. Mit der vorgeschlagenen Anhänger-Steuervorrichtung kann folglich nach einer Montage an einen Anhänger in vorteilhafterweise die Position und die Ausrichtung eines Anhängers zuverlässig, insbesondere automatisch, ermittelt werden.

Bevorzugt ist eine, oder sind die mindestens zwei, insbesondere beabstandeten, vorgegebenen Bereiche im Bereich oder in der Anhänger-Steuervorrichtung angeordnet. Es ist ferner denkbar, dass Sende- und Empfängereinheiten an den vorgegebenen Bereichen angeordnet sind, welche jeweils eine aktuelle Position in einer Datenbank abfragen können. Die vorgegebenen Bereiche sind bevorzugt in der Anhänger-Steuervorrichtung und/oder außerhalb der Anhänger-Steuervorrichtung an einem Anhänger angeordnet. Insbesondere ist mindestens eine Sende- und Empfängereinheit an einem vorgegebenen Bereich an einem Anhänger angeordnet. Beispielsweise kann einer, bevorzugt alle, der vorgegebenen Bereiche unterhalb der Ladefläche des Anhängers angeordnet sein und/oder einer der vorgegebenen Bereiche, insbesondere alle, an einer die Ladefläche abdeckenden Konstruktion des Anhängers angeordnet sein. Erfindungsgemäß sind, um eine besonders sichere Ermittlung der Ausrichtung zu erreichen, wenn alle vorgegebenen Bereiche auf dem Dach und/oder der Dachkonstruktion angeordnet, insbesondere dreiecksförmig. Um eine Richtungsbestimmung des Anhängers zu vereinfachen, sollte die dreiecksförmige Anordnung der vorgegebenen Bereiche dabei derart ausgebildet sein, dass diese Symmetrisch zur Längsrichtung des Anhängers angeordnet sind, vorteilhafterweise derart, dass diese dreiecksförmige Anordnung in Richtung der Fahrtrichtung bei Geradeausfahrt des Anhängers weist. An den vorbestimmten Bereichen können auch andere Marker angeordnet sein, welche es der Positions-Bestimmungseinheit erlauben, die aktuelle Position zu bestimmen. Die Marker könnten in Form von Chips oder dergleichen vorliegen. Hierdurch kann in vorteilhafter Weise die aktuelle Position und/oder die Ausrichtung des Anhängers bestimmt werden. Da der Anhänger eine gewisse Ausdehnung aufweist, ist es von Vorteil, mindestens einen vorgegebenen Bereich an oder nahe einem Umfangsbereich des Anhängers, insbesondere im Bereich einer Dachkonstruktion des Anhängers, anzuordnen. Hierdurch kann die aktuelle Position bzw. die aktuelle Ausrichtung des Anhängers zuverlässig bestimmt werden. Insbesondere kann die Ausrichtung besonders zuverlässig bestimmt werden, je weiter die mindestens zwei vorgegebenen Bereiche voneinander beabstandet sind, daher ist es bevorzugt, wenn das Verhältnis des maximalen Abstands der vorgegebenen Bereiche in eine Längsrichtung des Anhängers zur Gesamtlänge des Anhängers in Längsrichtung in einem Bereich von 0,6 bis 0,95 liegt. Besonders bevorzugt liegt das Verhältnis jedoch in einem Bereich von 0,75 bis 0,9, denn hierdurch ist eine besonders sichere Bestimmung der Ausrichtung des Anhängers möglich. Die Längsrichtung ist dabei insbesondere diejenige Richtung, in welcher der Anhänger seine größte Erstreckung aufweist. Alternativ oder zusätzlich bevorzugt ist die Längsrichtung dabei die Richtung, in welche der Anhänger bei einer Geradeausfahrt fährt. Besonders bevorzugt ist mindestens ein vorgegebener Bereich an dem Anhänger angeordnet, insbesondere nahe dem Königszapfen des Anhängers, um die Ausrichtung der Anhänger-Steuervorrichtung in Bezug auf den Anhänger zu bestimmen. Es ist ferner denkbar, die Anhänger-Steuervorrichtung in einem vorgegebene Bereich derart anzuordnen, so dass eine Ausrichtung und Position der Anhänger-Steuervorrichtung in Bezug auf den Anhänger vorgegeben sind und nicht bestimmt werden müssen.

Bevorzugt ist die Positions-Bestimmungseinheit als eine GPS-Einheit und/oder als eine GPRS-Einheit zum Abfragen der aktuellen Position mittels GPS und/oder mittels GPRS und/oder zur Kommunikation mit lokalen Sendemasten ausgebildet, wobei insbesondere auch vergleichbare Methoden zur Lokalisierung verwendbar sind. Die Anhänger-Steuervorrichtung kann folglich ihre aktuelle Position entweder über ein externes GPS/GPRS-System oder über eine Kontaktierung der lokalen Sendemasten abfragen, wobei es bevorzugt ist, wenn die GPS-Sensoren und/oder die GPRS-Systeme, insbesondere jeweils einer, in den vorgegebenen Bereichen angeordnet sind Ferner ist jede vergleichbare Methode zur Lokalisierung nutzbar, wobei insbesondere Methoden welche der Triangulation zugänglich sind, geeignet sind. Jedenfalls werden zur Abfrage der aktuellen Position der Anhänger-Steuervorrichtung Funksignale, oder Signales mittels Infrarot oder Radar oder dergleichen zwischen der Anhänger-Steuervorrichtung und der externen Positions-Bestimmungseinheit ausgetauscht. Insbesondere werden Signale ausgetauscht, welche sich für eine Durchführung einer Triangulation eignen.

Bevorzugt umfasst eine aktuell erfasste Position mindestens drei, insbesondere globale, Ortskoordinaten, insbesondere eine Höhenkoordinate, welche einen Abstand zu einer Erdoberfläche angibt. Mit der aktuellen Position des Anhängers bzw. der Anhänger-Steuervorrichtung können indirekt Informationen zu einem Beladungszustand eines Anhängers, an dem die Anhänger-Steuervorrichtung angeordnet ist, wiedergeben werden. Denn je beladener ein Anhänger ist, desto geringer wird der Höhenabstand zu der Erdoberfläche ausfallen. Andersherum, je weniger beladen ein Anhänger ist, desto größer wird der Höhenabstand zu der Erdoberfläche ausfallen. Zusätzlich und/oder alternativ kann hierdurch auch der Füllstand eines möglichen Luftfedersystems indirekt erfasst werden. Eine Bestimmung der Höhenkoordinate ist daher von Vorteil, um einen nachfolgenden Ankupplungsprozess zwischen einem Anhänger und einer Zugmaschine bestmöglich durchführbar zu machen bzw. zu erleichtern. Für den Fall, dass der Anhänger überladen sein sollte, d. h. eine Zugmaschine ggf. den Anhänger bei einem Ankupplungsprozess zerstören würde und/oder von der Motorleistung nicht ausreichend dimensioniert ist, um den Anhänger zu ziehen, kann dies noch vor dem Ankupplungsprozess einem Nutzer in dem Zugfahrzeug angezeigt werden. Einer der Vorteil der Bestimmung einer Höhenkoordinate ist folglich darin zu sehen, dass ein Abgleich der Ankupplungshöhe, welche auch als Aufsattelhöhe bezeichnet wird, zwischen der Zugmaschine und dem Anhänger zur Unterstützung des Kupplungsprozesses erfolgen kann.

Bevorzugt weist die Anhänger-Steuervorrichtung eine Auswerteeinheit zum Auswerten der erfassten Position, insbesondere zueinander, auf, um eine Ausrichtung der Anhänger-Steuervorrichtung in Bezug auf einen Anhänger durch Bestimmen einer Geraden durch mindesten zwei vorgegebene Positionen oder durch Bestimmen einer Ebene durch mindestens drei vorgegebene Positionen zu ermitteln. Insbesondere umfasst die Positions-Bestimmungseinheit die Auswerteeinheit oder ist mit der Auswerteeinheit verbunden. Die Auswerteeinheit kann dabei eine Speichereinheit, eine Energiequelle und/oder eine Steuereinheit umfassen oder mit diesen verbunden sein. Insbesondere ist die Auswerteeinheit dazu ausgebildet, einen Algorithmus zur Bestimmung der aktuellen Position und zur Bestimmung der aktuellen Ausrichtung zu implementieren, sobald aktuelle Ortskoordinaten bzw. aktuelle Positionen erfasst worden sind.

Ein weiterer Aspekt der vorliegenden Erfindung betrifft einen Anhänger mit einer Anhänger-Steuervorrichtung, insbesondere wie diese bereits beschrieben worden ist, zum Bestimmen einer aktuellen Position und/oder einer Ausrichtung des Anhängers zur Unterstützung eines Kupplungsprozesses mit einer Zugmaschine. Der Anhänger weist mindestens zwei vorgegebene Bereiche auf, welche beabstandet voneinander angeordnet sind. Eine Anhänger-Steuervorrichtung ist dabei an dem Anhänger, insbesondere dauerhaft, montiert. Die Anhänger-Steuervorrichtung kann dabei eine Positions-Bestimmungseinheit umfassen. Die Anhänger-Steuervorrichtung kann ferner eine Auswerteeinheit sowie weitere Komponenten umfassen. Die Positions-Bestimmungseinheit ist dazu ausgebildet, eine aktuelle Position der mindestens zwei vorgegebenen Bereiche zu erfassen, um eine Ausrichtung des Anhängers und/oder der Anhänger-Steuervorrichtung in Relation zu dem Anhänger zu bestimmen.

Die Anhänger-Steuervorrichtung ist ferner dazu ausgebildet, eine aktuelle Position der mindestens zwei vorgegebenen Bereiche, insbesondere in einer Datenbank, abzufragen, welche der aktuellen Position und/oder der Ausrichtung der Anhänger-Steuervorrichtung an dem Anhänger zugeordnet sind. Die erfassten aktuellen Positionsdaten können von der Positions-Bestimmungseinheit an eine Auswerteeinheit übergeben werden, wobei die Auswerteeinheit dazu ausgebildet ist, aus den aktuellen Positionen eine Ausrichtung des Anhängers zu bestimmen, um einen Kupplungsprozess mit einer Zugmaschine zu unterstützen. Besonders bevorzugt ist die Anhänger-Steuervorrichtung an dem Anhänger in einer vorgegebenen Relation bzw. einem vorgegebenen Abstand zu einem Königszapfen des Anhängers angeordnet. Hierdurch können die aktuell erfassten Positionen zu dem entsprechenden Königszapfen des Anhängers in Bezug bzw. in Relation zueinander gesetzt werden. Hierdurch kann ein Kupplungsprozess zwischen einer Zugmaschine und dem Anhänger zuverlässig in Bezug auf die Position des Königszapfens durchgeführt werden.

Bevorzugt umfasst der Anhänger mindestens zwei, besonders bevorzugt mindestens drei oder mehr, vorgegebene Bereiche, an welchen jeweils eine Sende- und Empfängereinheit angeordnet ist, welche jeweils die aktuelle Position, insbesondere die Koordinaten, abfragen und insbesondere der Positions-Bestimmungseinheit und/oder insbesondere der Auswerteeinheit übergeben. Insbesondere übergibt jede Sende- und Empfängereinheit der Positions-Bestimmungseinheit einen Identifikationscode zur eindeutigen Überprüfung der Zuordnung zu dem entsprechenden Anhänger. Die mindestens zwei vorgegebenen Bereiche sind bevorzugt beabstandet voneinander an dem Anhänger angeordnet. Hierbei kann beispielsweise ein vorgegebener Bereich in oder an der Anhänger-Steuervorrichtung vorgesehen sein, während ein weiterer vorgegebener Bereich an einer weiteren Stelle, welche möglichst beabstandet zu dem ersten vorgegebenen Bereich angeordnet ist, an dem Anhänger angeordnet sein. Besonders bevorzugt liegen die mindestens zwei vorgegebenen Bereiche auf gegenüberliegenden Seiten des Anhängers, insbesondere auf gegenüberliegenden Seiten entlang einer Längsachse bzw. Längsrichtung des Anhängers. Dadurch, dass jede Sende- und Empfängereinheit bevorzugt der Positions-Bestimmungseinheit auch einen IdentifikationsCode zur eindeutigen Überprüfung der Zuordnung zu dem entsprechenden Anhänger übergibt, wird vermieden, dass zwei Anhänger, welche nebeneinander stehen, einer Auswerteeinheit ihre Positionsdaten übergeben. Eine Bestimmung der Ausrichtung und der Position des entsprechenden Anhängers ist somit eindeutig und zuverlässig.

Bevorzugt ist jede Sende- und Empfängereinheit an einer festen Position bzw. einem festen Bereich an dem Anhänger angebracht. Besonders bevorzugt sind die festen Positionen bzw. Bereiche an dem Anhänger vorgegebene Bereiche, an denen die Sende- und Empfängereinheiten angeordnet sind. Hierdurch kann beispielsweise in dem Algorithmus, welcher zur Auswertung der aktuellen Ausrichtung bzw. Position des Anhängers verwendet wird, überprüft werden, ob die aktuell erfassten Koordinaten bzw. Positionen mit einem in der Auswerteeinheit hinterlegten möglichen festen Bereich der Sende- und Empfängereinheit übereinstimmen. Eine Verwechslung mit Positionsdaten anderer Anhänger ist hierdurch ausgeschlossen.

Bevorzugt sind/werden die erfassten aktuellen Positionen der Auswerteeinheit zur Bestimmung der Ausrichtung übergeben bzw. sind dieser übergebar, wobei die Auswerteeinheit dazu ausgebildet ist, aus den übermittelten erfassten vorgegebenen Bereichen eine Achse/Gerade oder eine Ebene zu bestimmen, welche die erfassten vorgegebenen Bereiche aufspannen. Durch die Position von zwei Punkten kann eine Steuer-Software eine Achse bzw. durch drei Punkte eine Ebene berechnen, deren Lage relativ zu einem Königszapfen bekannt ist. Hierdurch kann wiederum die Ausrichtung des Anhängers zuverlässig und eindeutig ermittelt werden.

Bevorzugt bestimmt die Auswerteeinheit eine Höhe des Anhängers über einer Erdoberfläche, um zu bestimmen, insbesondere zu berechnen, ob ein Ankuppeln einer Zugmaschine an den Anhänger erfolgen kann. Falls ein Ankuppeln nicht erfolgen kann, wenn also der Anhänger beispielsweise überladen ist und demensprechend eine zu geringe Höhe über der Erdoberfläche aufweist, so kann dies einem Nutzer in dem Nutzfahrzeug angezeigt werden. Hierdurch kann vermieden werden, dass bei einem Ankuppeln der Anhänger bzw. die Zugmaschine zerstört oder beschädigt wird.

Weiter bevorzugt ist zu jedem vorgegebenen Bereich eine relative Lage zu dem Königszapfen des Anhängers in der Auswerteeinheit hinterlegbar oder hinterlegt. Mit dem Begriff "Lage" ist vorliegend insbesondere eine Position und/oder eine Ausrichtung zu dem Königszapfen des Anhängers gemeint. Durch Bestimmung der relativen Lage des vorgegebenen Bereichs, insbesondere einer Sende- und Empfangseinheit, relativ zu dem Königszapfen wird sichergestellt, dass ein Kupplungsprozess zwischen einer Zugmaschine und dem Anhänger sicher erfolgen kann.

Besonders bevorzugt ist in der Anhänger-Steuervorrichtung ein Abstand der Anhänger-Steuervorrichtung und/oder ein Abstand zu den parallel zu dem Königszapfen beabstandeten Flanken des Anhängers hinterlegbar oder hinterlegt. Insbesondere durch Hinterlegung eines Abstandes zu den Flanken des Anhängers kann sichergestellt werden, dass einem Nutzer eines Zugfahrzeuges eine Position und eine Richtung wiedergegeben werden kann, von welcher sich ein Nutzer mit dem Nutzfahrzeug dem Anhänger nähern kann, um den Kupplungsprozess zwischen dem Nutzfahrzeug und dem Anhänger durchzuführen.

Bevorzugt ist die Auswerteeinheit dazu ausgebildet, die abgefragten oder ausgewerteten - Koordinaten - der vorgegebenen Bereiche und/oder die relative Lage des Königszapfens an eine anzukuppelnde Zugmaschine zu übermitteln, insbesondere mittels einer Drahtlos-Verbindung. Insbesondere kann die Auswerteeinheit über eine Sendeeinheit der Anhänger-Steuervorrichtung die abgefragten oder ausgewerteten Positionen an eine Zugmaschine übermitteln. Die Übermittlung der ausgewerteten Positionen erfolgt dabei bevorzugt verschlüsselt, um einen unerlaubten Zugriff auf diese Daten zu verhindern. Bevorzugt verfügt die Anhänger-Steuervorrichtung daher über eine Verschlüsselungseinheit oder über einen Kodierer/Encoder. Die Übermittlung dieser Daten kann beispielsweise direkt über Funkwellen geschehen. Weiter bevorzugt können die übermittelten Positionen auch einem Nutzer der Zugmaschine auf einem Bildschirm angezeigt werden.

Bevorzugt kommuniziert die Positions-Bestimmungseinheit mit einer GPS-Datenbank oder mit lokalen Sendemasten oder dergleichen, um die aktuellen vorgegebenen Bereiche bzw. Positionen abzufragen.

Ein weiterer Aspekt der vorliegenden Erfindung betrifft ein Ankupplungssystem, welches eine Zugmaschine und einen Anhänger, wie zuvor beschrieben, umfasst. Ferner umfasst das Ankupplungssystem eine Anhänger-Steuervorrichtung, insbesondere wie diese zuvor beschrieben worden ist. Die Zugmaschine umfasst dabei mindestens eine Steuereinheit, welche ausgebildet ist, mit der Anhänger-Steuervorrichtung zur Abfrage einer aktuellen Position und/oder einer Ausrichtung in Bezug auf den Anhänger zu kommunizieren und wobei die Steuereinheit ausgebildet ist, entsprechende Einstellungen an der Zugmaschine vorzunehmen, um einen, insbesondere automatischen, Kupplungsprozess zwischen der Zugmaschine und dem Anhänger durchzuführen. Insbesondere ist die Steuereinheit dazu ausgebildet, Einstellungen der Räder der Zugmaschine derart vorzunehmen, dass ein Kupplungsprozess mit dem Anhänger durchführbar ist. Hierbei werden Winkeleinstellungen in Bezug zu einer Achse, an der die Räder aufgehängt sind, entsprechend von der Steuereinheit bestimmt und eingestellt. Alternativ oder zusätzlich bevorzugt kann die Steuereinheit auch die Motorleistung und/oder die Bremsleistung des Zugfahrzeugs steuern. Hierdurch kann die Zugmaschine sicher und zuverlässig an den Anhänger ankoppeln.

Bevorzugt umfassen die entsprechenden Einstellungen Radeinstellungen der Zugmaschine, insbesondere Winkeleinstellungen in Bezug auf eine Achse der Zugmaschine und/oder einen Abstand zu dem Königszapfen des anzukuppelnden Anhängers. In Anbetracht eines erfassten Abstandes der Zugmaschine zu dem Königszapfen können die Räder der Zugmaschine einen Winkel zu einer Achse der Zugmaschine in einem Bereich von 0°-90°, bevorzugt in einem Bereich von 0°-35°, aufweisen.

Bevorzugt umfasst die Zugmaschine des Ankupplungssystems einen Bildschirm, auf welchem die ausgewerteten vorgegebenen Bereiche und/oder die relative Lage des Königszapfens, insbesondere ein Höhenabstand des Königszapfens zu einer Erdoberfläche, einem Nutzer der Zugmaschine anzeigbar sind. Insbesondere sind dem Nutzer ein aktueller Abstand und ein aktuell aufgespannter Winkel zwischen einer Andockstelle der Zugmaschine und dem Königszapfen des Anhängers anzeigbar. Vorteilhafterweise verfügt die Zugmaschine auch noch über eine Sensoreinheit, welche den aktuellen Winkel zumindest eines lenkbaren Rades einer Achse der Zugmaschine erfasst. Besonders bevorzugt wird auf Basis dieser vom Sensor erfassten Winkellage eine aktuelle Fahrroute des Zugfahrzeugs berechnet und dann zusätzlich auf dem Bildschirm dargestellt, so dass der Benutzer, insbesondere aus einer Art Vogelperspektive, den Ankuppelprozess überwachen kann und/oder manuell durchführen und/oder korrigierend in den automatischen Kuppelprozess eingreifen kann. Alternativ oder zusätzlich bevorzugt kann an einem Bereich der Zugmaschine, welcher einer Andockposition des Anhängers gegenüber liegt, ein Erfassungssystem in Form einer Detektionseinheit, welche beispielsweise ein Kamerasystem und/oder ein Sensorsystem, insbesondere ein Radar- und/oder Lidarsystem, umfassen, angeordnet sein. Ein anzukuppelnder Anhänger kann somit visuell erfasst und einem Nutzer angezeigt werden. Ferner können die ausgewerteten Positionsdaten auf dem Bildschirm angezeigt werden.

Insbesondere können die ausgewerteten Positionsdaten in Überlagerung des erfassten visuellen Bildes angezeigt werden. Ferner können auch ein Abstand der Zugmaschine zu dem Anhänger sowie Radeinstellungen des Anhängers auf dem Bildschirm einem Nutzer angezeigt werden.

Bevorzugt ist die Zugmaschine selbstfahrend ausgebildet und kann die ausgewerteten vorgegebenen Bereiche und/oder die relative Lage des Königszapfens automatisch zur Durchführung des Kupplungsvorganges mit dem Anhänger ansteuern. Insbesondere weist die Zugmaschine ein Erfassungssystem zur Erfassung einer Umgebung auf einer Ankopplungsseite der Zugmaschine auf. Das Erfassungssystem kann beispielsweise als ein Kamerasystem ausgebildet sein, welches visuell Bilder auf den Bildschirm der Zugmaschine dem Nutzer anzeigt.

Gemäß einem weiteren Aspekt der vorliegenden Erfindung wird ein Verfahren zum Durchführen eines Kupplungsprozesses zwischen einer Zugmaschine und einem Anhänger mit einem Ankupplungssystem, wie es bereits beschrieben worden ist, vorgeschlagen. Dabei weist das Ankupplungssystem eine Zugmaschine und einen Anhänger auf. An dem Anhänger ist eine Anhänger-Steuervorrichtung, insbesondere wie bereits beschrieben, zum Abfragen und Auswerten einer aktuellen Position und Ausrichtung des Anhängers angeordnet. Die Anhänger-Steuervorrichtung umfasst eine Auswerteeinheit zum Auswerten und Übergeben der aktuellen Position und Ausrichtung an eine Steuereinheit der Zugmaschine. Das vorgeschlagene Verfahren umfasst folgende Schritte: Bestimmen einer Ausrichtung des Anhängers durch Auswerten einer Geraden oder einer Ebene durch mindestens zwei oder mindestens drei erfasste aktuelle Positionen von vorgegebenen Bereichen an dem Anhänger, ein Übersenden der aktuellen Position und der Ausrichtung des Anhängers an eine Steuereinheit der Zugmaschine, insbesondere mittels einer Drahtlosverbindung, und ein Ansteuern der aktuellen Position und der Ausrichtung des Anhängers durch die Zugmaschine zur Durchführung eines, insbesondere automatischen, Kupplungsprozesses. Zur Durchführung des vorgeschlagenen Verfahrens wird folglich eine Anhänger-Steuervorrichtung, wie beschrieben, ein Anhänger, wie beschrieben, in einem System, wie beschrieben, verwendet. Zur Durchführung des vorgeschlagenen Verfahrens kommunizieren die Zugmaschine und die an dem Anhänger angebrachte Steuervorrichtung hinsichtlich der aktuellen Position und der aktuellen Ausrichtung des Anhängers und der Zugmaschine zueinander. Es ist denkbar, das vorgeschlagene Verfahren durch ein Kamerasystem, welches vorzugsweise an der Zugmaschine angeordnet ist, zu überwachen.

Bevor ein Kupplungsprozess ausgeführt wird, kann zu nächst ein Anhänger mit einer beschriebenen Anhänger-Steuervorrichtung in einem Fuhrpark automatisch identifiziert und/oder aufgefunden werden.

Weitere Vorteile und Merkmale der vorliegenden Erfindung ergeben sich aus der nachfolgenden Beschreibung bevorzugter Ausführungsformen mit Bezug auf die beigefügten Figuren. Es versteht sich, dass einzelne, in den jeweiligen Figuren gezeigte, Ausführungsformen Merkmale aufweisen können, die auch in anderen Ausführungsformen zum Einsatz gelangen können, auch wenn dies nicht explizit genannt ist, und sofern dies nicht aufgrund technischer Gegebenheiten oder explizit ausgeschlossen wurde. Es zeigen:
- Figur 1:: eine schematische Ansicht einer Anhänger-Steuervorrichtung, welche mit einer Sendeeinheit und/oder einer Empfangseinheit wechselwirken kann,
- Figur 2:: ein System zum Auffinden und/oder zur Identifikation eines Anhängers mit einer Anhänger-Steuereinheit,
- Figur 3:: eine alternative Ausführungsform des Systems nach Figur 2,
- Figur 4:: ein System gemäß der Figuren 3 und 2, welches ein Antwortsignal an eine externe Empfangseinheit sendet,
- Figur 5:: einen Anhänger, insbesondere einen Sattelschlepper, an dem eine erfindungsgemäße Anhänger-Steuervorrichtung montiert ist, und
- Figur 6:: eine schematische Draufsicht auf ein erfindungsgemäßes Ankupplungssystem, welches nach einer Bestimmung der Position und Ausrichtung eines anzukuppelnden Anhängers in einem Fuhrpark für einen Kupplungsprozess nutzbar ist.

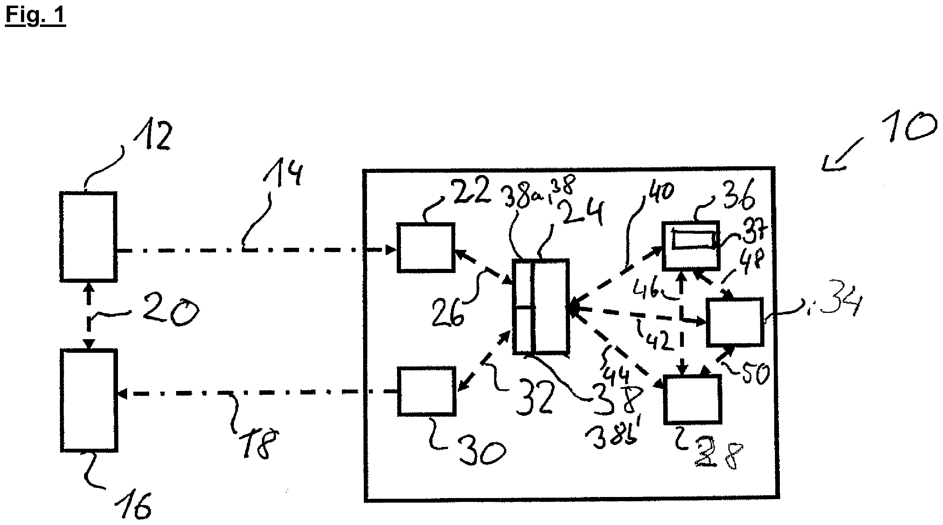

Figur 1 zeigt eine Anhänger-Steuervorrichtung 10, welche mit einer Sendeeinheit 12 kommunizieren kann. Das Kommunizieren zwischen der Sendeeinheit 12 und der Anhänger-Steuervorrichtung 10 ist durch den Pfeil 14 angedeutet. Ferner kann die Anhänger-Steuervorrichtung 10 mit einer Empfangseinheit 16 kommunizieren. Diese Kommunikation ist durch den Pfeil 18 angedeutet. Ferner ist es denkbar, dass die Sendeeinheit 12 und die Empfangseinheit 16 untereinander kommunizieren können, welches durch den Doppelpfeil 20 angedeutet ist. Es ist denkbar, dass die Sendeeinheit 12 und die Empfangseinheit 16 in einer Einheit zusammengefasst sind (nicht dargestellt).

Zum Empfangen eines Signals von der externen Sendeeinheit 12 weist die Anhänger-Steuervorrichtung 10 eine Empfangseinheit 22 auf, welche das empfangene Signal an einen Komparator 24 übergibt. Zwischen der Empfangseinheit 22 und dem Komparator 24 kann es eine Drahtverbindung oder eine Drahtlos-Verbindung geben. Die Kommunikation zwischen dem Komparator 24 und der Empfangseinheit 22 ist in Figur 1 durch den Doppelpfeil 26 dargestellt. Der Komparator 24 ist dazu ausgebildet, das empfangene Signal mit einem vorgegebenen Signal zu vergleichen. Das vorgegebene Signal kann dabei in dem Komparator 24 selbst oder in einer Speichereinheit 28 hinterlegt sein. Der Komparator 24 und die Speichereinheit 28 können miteinander kommunizieren (Doppelpfeil 44).

Wenn das empfangene Signal mit dem vorgegebenen Signal übereinstimmt, übergibt der Komparator 24 ein Antwortsignal an eine Sendeeinheit 30, welches durch den Doppelpfeil 32 indiziert ist. In der Speichereinheit 28 können neben dem vorgegebenen Signal ferner die aktuelle Position und/oder das Antwortsignal oder andere Daten neu eingespeichert werden oder bereits gespeichert sein.

Insbesondere ist die Speichereinheit 28 mit weiteren Einheiten 34, 36, 38 kommunikativ verbunden. Die Kommunikation der Einheiten 24, 28, 34, 36, 38 untereinander sind durch die Doppelpfeile 40, 42, 44, 46, 48, 50 schematisch angezeigt.

Wie in Figur 1 dargestellt, ist die Speichereinheit 28 beispielsweise mit einer Positions-Bestimmungseinheit 36 gekoppelt. Die Positions-Bestimmungseinheit 36 ist insbesondere als eine GPS-Einheit ausgebildet und dient zur Bestimmung einer aktuellen Position der Anhänger-Steuervorrichtung 10. Die Positions-Bestimmungseinheit 36 ist mit dem Komparator 24 und/oder einer Verschlüsselungseinheit 38, 38b oder einer Entschlüsselungseinheit 38, 38a zur Kommunikation verbunden. Insbesondere ist die Entschlüsselungseinheit 38, 38a bzw. die Verschlüsselungseinheit 38, 38b als eine Einheit ausgebildet. Es ist ferner denkbar, dass die Entschlüsselungseinheit 38a und die Verschlüsselungseinheit 38b als zwei unterschiedliche Einheiten ausgebildet sind. Die Verschlüsselungseinheit 38, 38b oder die Entschlüsselungseinheit 38, 38a sind optional.

Wie in Figur 1 dargestellt, kann die Anhänger-Steuervorrichtung 10 eine Energiequelle 34 aufweisen, welche die weiteren Einheiten der Anhänger-Steuervorrichtung mit Energie versorgt. Die Energiequelle 34 kann beispielsweise mit einem Ackumulator ausgebildet sein, welcher sich aufladen kann, wenn ein Anhänger, an dem die Anhänger-Steuervorrichtung 10 montiert ist, an eine Zugmaschine gekoppelt ist.

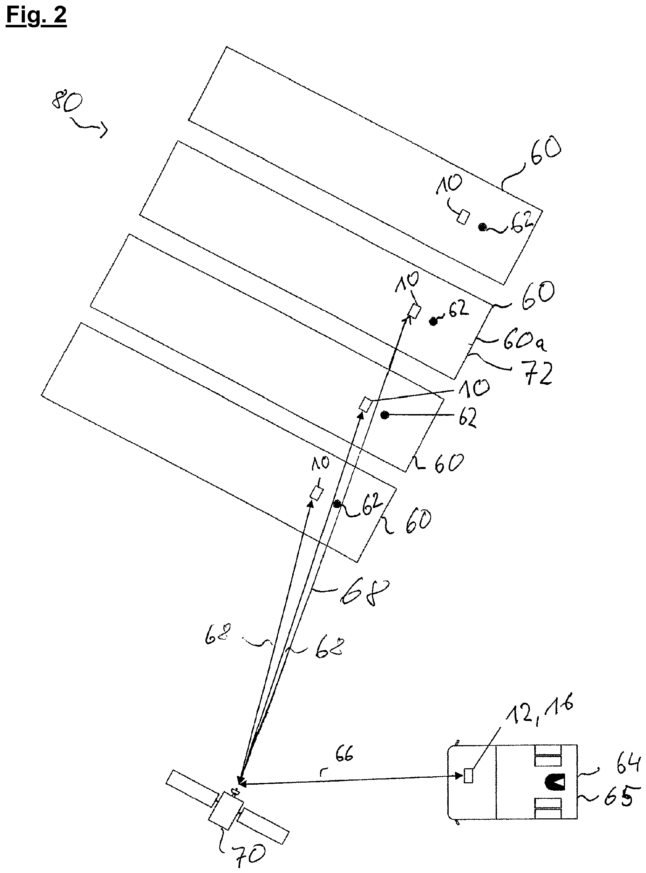

In Zusammenschau der Figuren 2, 3 und 4 werden nachfolgend die Ausführungsformen des Systems 80 zum Auffinden eines Anhängers 60 erläutert. Die Figuren 2, 3 und 4 zeigen folglich jeweils ein System 80. Insbesondere Figur 2 zeigt, wie eine Zugmaschine 64, welches die externe Sende-Einheit 12 und/oder die externe Empfangseinheit 16 umfasst, ein Signal an eine externe GPS-Einheit 70 übersendet. Die externe GPS-Einheit 70 leitet das Signal an die Anhänger-Steuervorrichtungen 10, welche jeweils an einem Anhänger 60 montiert sind, weiter. Die Signalweiterleitungen sind jeweils durch die Pfeile 66 und 68 in Figur 2 gezeigt. Jeder der Anhänger 60 weist neben der Anhänger-Steuervorrichtung 10 einen Königszapfen 62 auf, an welchem die Zugmaschine 64 ankoppelbar ist. Wie in Figur 2 dargestellt, übermittelt die Zugmaschine 64 bzw. die externe Sendeeinheit 12 der Zugmaschine 64 zunächst ein Signal an mehrere Anhänger 60, um die aktuelle Position eines aufzufindenden Anhängers 60a zu ermitteln.

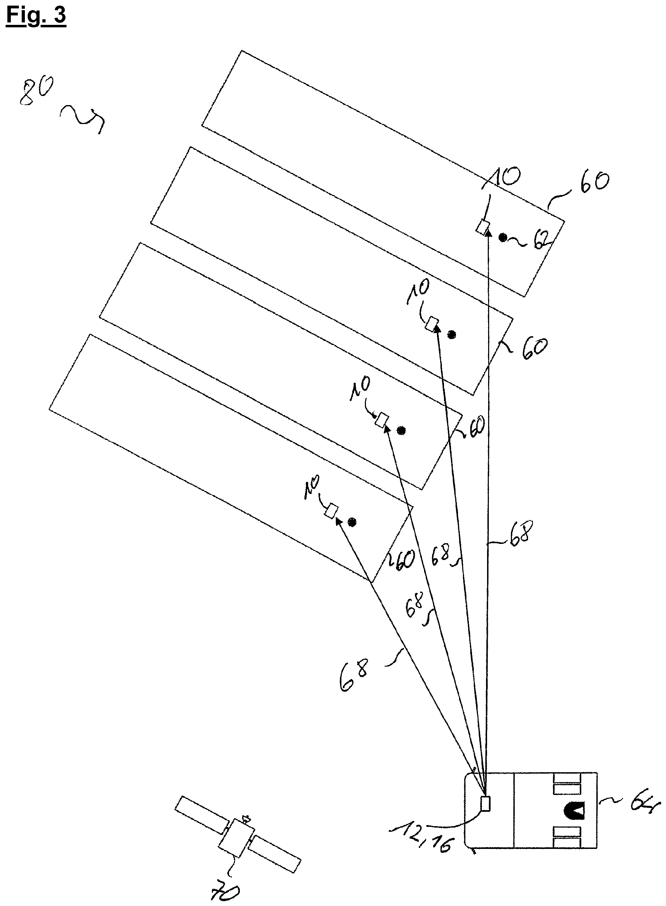

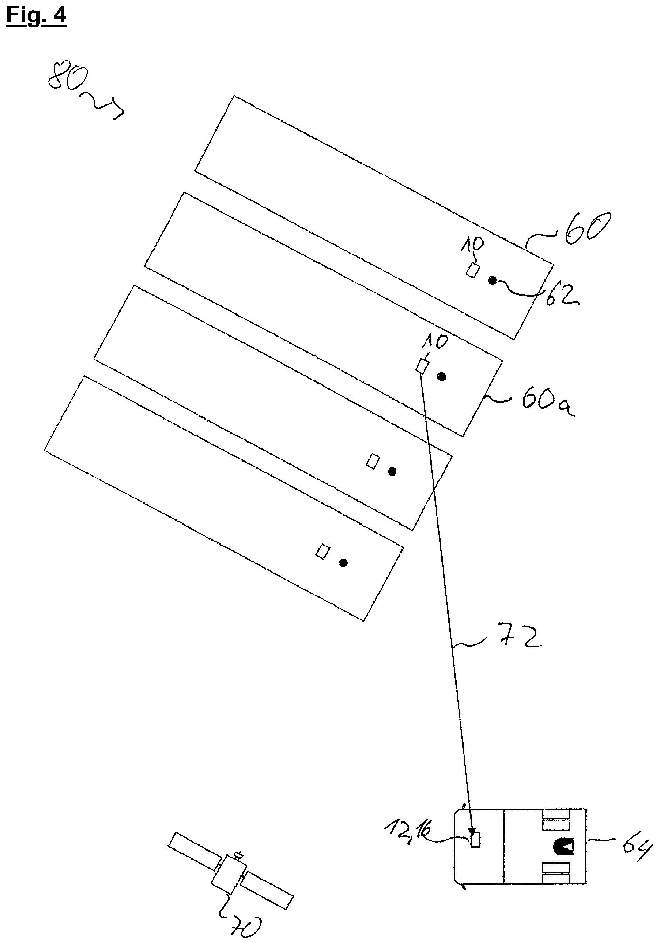

Figur 2 zeigt eine Ausführungsform des Systems, bei dem die Zugmaschine 64 bzw. die ortsfeste Logistikeinheit, das von den Anhängern 60 zu empfangende Signal über eine externe GPS-Einheit 70 an die Anhänger 60 übermittelt. Gemäß der Ausführungsform, welche in Figur 3 dargestellt ist, übersendet die Zugmaschine 64 bzw. die ortsfeste Logistikeinheit das Signal direkt an die Anhänger-Steuervorrichtungen 10 der Anhänger 60. Dies kann beispielsweise auch über lokale Sendemasten erfolgen (nicht dargestellt). Von jedem Anhänger 60 bzw. von jeder Anhänger-Steuervorrichtung 10, welche an einem Anhänger 60 montiert ist, wird das empfangene Signal, wie bereits oben in Bezug auf Figur 1 beschrieben, ausgewertet, d. h. mit einem vorgegebenen Signal verglichen. Bei Übereinstimmung eines vorgegebenen Signals mit dem empfangenen Signal sendet ein Anhänger 60, d. h. der aufzufindende Anhänger 60a, ein Antwortsignal zurück an die Empfangseinheit 16 in der Zugmaschine 64. Bei dem vorgeschlagenen System 80 wird zum Auffinden eines Anhängers 60a aus mehreren Anhängern 60 zunächst ein Abfragesignal an mehrere Anhänger 60 gesandt. Nur bei Übereinstimmung des empfangenen Signals mit einem vorgegebenen Signal, welches vorzugsweise in der Anhänger-Steuervorrichtung 10 hinterlegt ist, sendet der entsprechende Anhänger 60a, welcher aufzufinden ist, ein Antwortsignal zurück an die Zugmaschine 64 bzw. die ortsfeste Logistikeinheit. Durch ein Zurücksenden des Antwortsignals, welches mit dem Bezugszeichen 72 in Figur 4 angedeutet ist, kann der aufzufindende Anhänger 60a identifiziert bzw. aufgefunden werden. Das Auffinden des Anhängers 60a erfolgt insbesondere automatisch. Ein solches Auffinden ist in Figur 4 schematisch dargestellt, wobei ein solches Auffinden sowohl bei einem System gemäß Figur 2 als auch gemäß Figur 3 erfolgt.

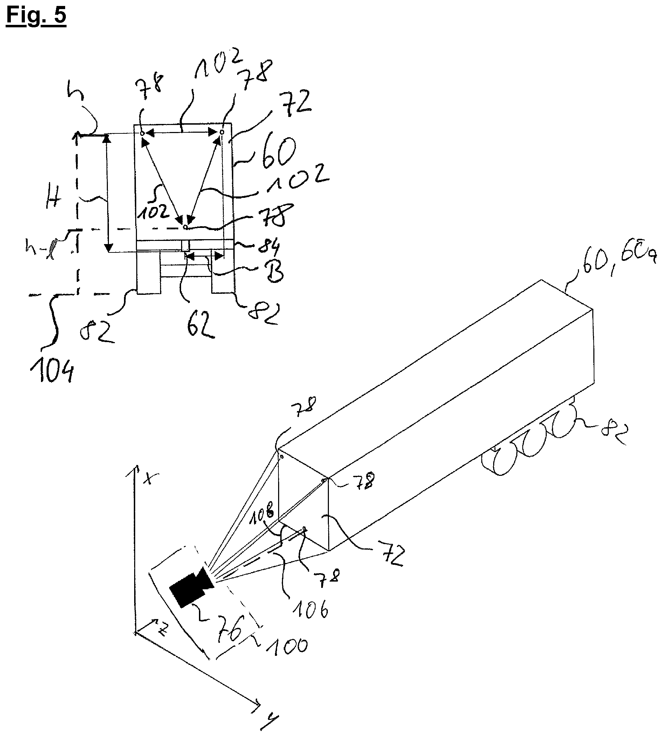

Figur 5 zeigt einen Anhänger 60 bzw. einen aufgefundenen Anhänger 60a, an welchem eine Zugmaschine 64 nach dem Auffinden des Anhängers 60a anzukuppeln ist. Zur Unterstützung des Ankupplungsprozesses zwischen Zugmaschine 64 und Anhänger 60a kann das Antwortsignal insbesondere Ortskoordinaten umfassen, welche ein automatisches Kuppeln zwischen dem Anhänger 60a und der Zugmaschine 64 unterstützen. Nur schematisch dargestellt in Figur 5 ist ein Kamerasystem 76, welches bevorzugt an der Zugmaschine 64 angeordnet ist (nicht dargestellt). Ein solches Kamerasystem 76 kann den Kupplungsprozess zwischen der Zugmaschine 64 und dem Anhänger 60, 60a weiter, insbesondere zur visuellen Anzeige für einen Fahrer der Zugmaschine 64, unterstützen. Zur Unterstützung des Kupplungsprozesses zwischen dem Anhänger 60a und der Zugmaschine 64 sind an dem Anhänger 60 , 60a fest vorgegebene Punkte 78 angeordnet, welche von dem Kamerasystem 76 erfassbar sind. Die fest vorgegebenen Punkte 78 ermöglichen es, den Königszapfen 62, insbesondere durch Unterstützung eines Fahrers, aufzufinden. Denn eine Höhe H und/oder eine Breite B der vorgegebenen Punkte 78 zu dem Königszapfen 62 des Anhängers sind fest vorgegeben und unabhängig von einer Beladung des Anhängers 62. Das Auffinden der vorgegebenen Punkte 78 kann einem Fahrer folglich dazu dienen, den Anhänger 62 korrekt anzufahren, und können von dem Kamerasystem 76 erfasst und verwendet werden, um ggf. genötigte Kurzkorrekturen des Zugmaschine anzuzeigen. Insbesondere eie Höhe h kann sich durch eine Beladung des Anhängers 60, 60a oder durch einen aktuellen Reifendruck der Reifen 82 verändern. Daher ist es von Bedeutung, dass die Höhe H von dem Beladungszustand unabhängig ist. Insbesondere gibt ein fester Punkt 78 einen Abstand zwischen dem Königszapfen 62 und einer äußeren Flanke 84 des Anhängers 60, 60a an.

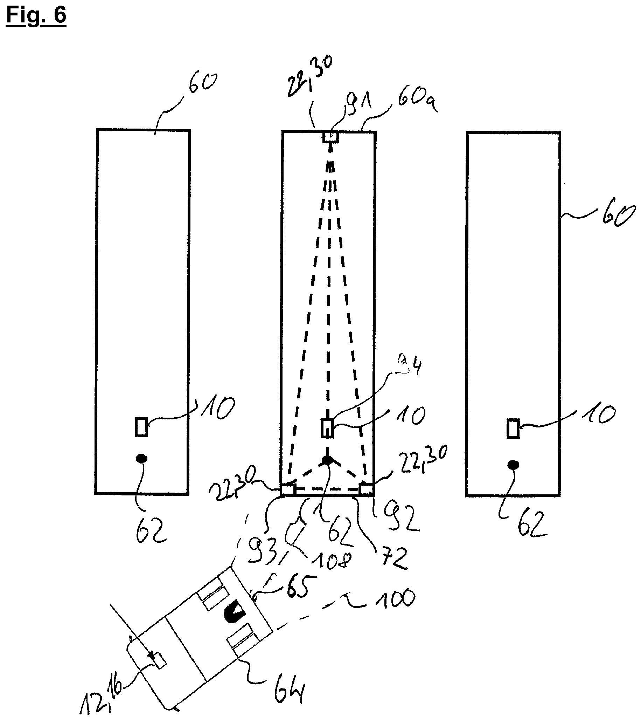

Figur 6 zeigt eine Vielzahl an Anhängern 60, mit jeweils einer Anhänger-Steuervorrichtung 10 und einem Königszapfen 62. Der aufgefunden Anhänger 60a weist ferner ein erfindungsgemäßes Ankupplungssystem mit vorgegebenen Bereichen 91, 92, 93 des aufgefundenen Anhängers 60, 60a auf. Die vorgegebenen Bereiche 91, 92, 93 des Anhängers 60, 60a können jeweils über eine Sende- und Empfängereinheit erfasst werden. Die erfassten Positionen der vorgegebenen Bereiche 91, 92, 93 können dann mittels einer Auswerteeinheit 37, welche in der Anhänger-Steuervorrichtung 10 integriert ist, ausgewertet werden. In der Auswerteeinheit 37 werden beispielsweise Geraden oder Ebenen durch die erfassten Punkte 91, 92 und 93 ermittelt. Es ist ferner denkbar, dass auch die Anhänger-Steuervorrichtung 10 eine erfasste Position 94 darstellt. Die erfassten Positionen 91-94 können dann beispielsweise in Relation zu dem Königszapfen 62 des aufgefundenen Anhängers 60a bestimmt werden. Die Sende- und Empfängereinheit des Anhängers 60, 60a fragt beispielsweise über ein externes GPS-System 70 oder über lokale Sendemasten die aktuelle Position ab, d. h. die Koordinaten des entsprechenden vorgegebenen Punktes 91-94. Mittels der erfassten Punkte 91-94 wird mit einer Software die Position und Ausrichtung des Anhängers 60, 60a, insbesondere in Relation zu dem Königszapfen bestimmt und ggf. in der Speichereinheit 28 hinterlegt. Bevorzugt werden die erforderlichen Positionsdaten mittels Drahtlosverbindung von der Anhänger-Steuereinheit 10 an eine Zugmaschine 64 übertragen, sodass die Zugmaschine 64 den aufgefundenen Anhänger 60a ansteuern kann und eine Kupplung zwischen der Zugmaschine 64 und dem Anhänger 60a durchgeführt werden kann.

Nach einem Auffinden des Anhängers 60a steuert die Zugmaschine 64 den aufgefundenen Anhänger 60a an, um diesen anzukuppeln. Zur Durchführung des Ankupplungsprozesses erfasst die Detektionseinheit 100, welche insbesondere ein Kamerasystem 76 und/oder ein Sensorsystem umfasst und auf einer Ankupplungsseite 65 der Zugmaschine 64 angeordnet ist, das detektierbare Muster 77 auf einer Ankupplungsseite 72 des Anhängers 60, 60a, wobei das detektierbare Muster 77 durch die vorgegebenen Punkte 78 gegeben ist. Die Detektionseinheit 100 kann das detektierbare Muster 77 beispielsweise mittels Ultraschall und/oder optisch oder dergleichen erfassen. Wie in Figur 5 dargestellt sind die vorgegebenen Punkte 78 in einer Dreieckskonfiguration auf der Ankupplungsseite 72 angeordnet, wobei zwei vorgegebene Punkte jeweils an einem oberen äußeren Bereich, oberhalb einer Erdoberfläche 104 in einer Höhe h angeordnet sind und ein fest vorgegebener Punkt 78 oberhalb des Königszapfens 62 in einer Höhe h-l oberhalb der Erdoberfläche 104 angeordnet ist, wobei die Höhe h-l kleiner als die Höhe h ist. Es ist denkbar, dass das detektierbare Muster 77 in einer anderen Konfiguration der fest vorgegebenen Punkte an der Ankupplungsseite 72 angeordnet ist, insbesondere mit einer anderen Anzahl an fest vorgegebenen Punkten. Die Detektionseinheit 100 ist mit einer Steuereinheit, insbesondere per Drahtverbindung oder per Drahtlosverbindung, zum Auswerten des detektierbaren Musters 77 verbunden. Bei einer Auswertung wird, insbesondere mittels Triangulation, eine aktuelle Entfernung 106 und/oder ein aktueller Winkel 108 zwischen dem Anhänger 60, 60a und der Zugmaschine 64 und/oder eine Höhe h des Anhängers 60, 60a bestimmt. Die Auswertung erfolgt bevorzugt auf Basis der Teilanzahl an Pixeln, welche das detektierbare Muster 77 erfasst haben. Sind der aktuelle Winkel 108 und/oder die aktuelle Entfernung 106 für einen optimalen Ankupplungsprozess nicht gegeben, so können beispielsweise Radeinstellungen der Zugmaschine 64 geändert werden, so dass ein Ankupplungsprozess bestmöglich durchführbar ist. Die fest vorgegebenen Punkte 78 sind auf der Ankupplungsseite 72 des Anhängers 60, 60a in einem fest vordefinierten Abstand 102 angeordnet. Ein fest vorgegebener Abstand 102 zwischen zwei fest vorgegebenen Punkten 78 kann ein anderer sein, als ein fest vorgegebener Abstand 102 zwischen zwei anderen fest vorgegebenen Punkten 78, wie dies beispielsweise der Dreieckskonfiguration gemäß Figur 5 zu entnehmen ist.

Die Detektionseinheit 100, insbesondere das Kamerasystem 75, erfasst ein Bild mit einer fest vorgegebenen Gesamtanzahl an Pixeln, wobei das detektierbare Muster 77 und/oder die Anhängerflanken in einer Teilanzahl der Gesamtanzahl an Pixel erfasst ist und durch Auswertung der Teilanzahl an Pixeln, auf denen das detektierbare Muster 77 und/oder die Anhängerflanken erfasst ist/sind, eine aktuelle Entfernung 106 und/oder ein Winkel 108 zwischen der Detektionseinheit 100 und dem Anhänger 60, 60a ermittelbar ist. Insbesondere ist eine Höhe h des Anhängers 60, 60a von der Erdoberfläche 104 durch die Detektionseinheit 100 ermittelbar. Die erfasste Höhe h gibt folglich einer Entfernung zur Erdoberfläche 104 an, wodurch ein Beladungszustand des Anhängers 60, 60a abgeschätzt werden kann. Insbesondere kann durch die Höhenbestimmung h eine Überladung des Anhängers 60, 60a festgestellt werden, bei welchem ein Ankupplungsprozess zu einer Beschädigung an der Zugmaschine 64 und/oder dem Anhänger 60, 60a führen würde. Je weniger Pixel das detektierbare Muster 77 erfassen, desto größer ist die aktuelle Entfernung 106 zwischen dem Anhänger 60, 60a und der Zugmaschine 64. Hingegen, je mehr Pixel das detektierbare Muster 77 erfassen, desto kleiner ist die aktuelle Entfernung 106 zwischen dem Anhänger 60, 60a und der Zugmaschine 64. Ferner weist eine asymmetrische Verteilung der Teilanzahl an Pixeln, welche das detektierbare Muster 77 erfasst haben, darauf hin, dass der Anhänger 60, 60a und die Zugmaschine 64 einen Winkel 108 zueinander aufweisen. Mit asymmetrischer Verteilung ist vorliegend gemeint, dass beispielsweise in einem Bereich auf der Ankupplungsseite 72 eine Zahl n>0 an Pixeln einen fest vorgegebenen Punkt 78 erfasst hat, während ein anderer symmetrisch angeordneter fest vorgegebener Punkt 78 nur durch eine Zahl m>0 an Pixeln erfasst ist, wobei m<n gilt und m, n eine ganze natürlich Zahl ist. Wäre ein Winkel von etwa 90° zwischen einer Erstreckung der Detektionseinheit 100 und der Ankupplungsseite 72 gegeben, so würde m=n sein. Dies ist gleichbedeutend mit einer Erstreckung der Detektionseinheit 100 parallel zur Erstreckung des Anhängers 60, 60a in z-Richtung (siehe Figur 5).

### Bezugszeichenliste:

- 10:: Anhänger-Steuervorrichtung
- 12:: Sendeeinheit
- 14:: Signalübermittlung
- 16:: Empfangseinheit
- 18:: Signalübermittlung
- 20:: Empfangseinheit
- 24:: Komparator
- 26:: Signalübermittlung
- 28:: Speichereinheit
- 30:: Sendeeinheit
- 32:: Signalübermittlung
- 34:: Energiequelle
- 36:: Positions-Bestimmungseinheit
- 37:: Auswerteeinheit
- 38:: Verschlüsselungseinheit/Entschlüsselungseinheit
- 38a:: Entschlüsselungseinheit
- 38b:: Verschlüsselungseinheit
- 40-50:: Signalübermittlung
- 60:: Anhänger
- 62:: Königszapfen
- 64:: Zugmaschine
- 65:: Ankupplungsseite der Zugmaschine
- 66:: Signalübermittlung
- 68:: Signalübermittlung
- 70:: Externe GPS-Einheit
- 72:: Ankupplungsseite des Anhängers
- 76:: Kamerasystem
- 77: detektierbares Muster
- 78:: fester Punkt
- 80:: System
- 82:: Reifen
- 84:: Flanke
- 91-94:: vorgegebene Position bzw. vorgegebener Bereich
- 100:: Detektionseinheit
- 102:: vordefinierter Abstand
- 104: Erdoberfläche
- 106: aktuelle Entfernung
- 108: Winkel

- H:: Höhe
- B:: Breite
- h:: Höhe zur Erdoberfläche
- h-l:: Höhe zur Erdoberfläche, wobei h-l<h

## Patentansprüche

1. Anhänger-Steuervorrichtung (10) zum Montieren an einen Anhänger (60), wobei die Anhänger-Steuervorrichtung (10) zum Bestimmen einer aktuellen Position und einer Ausrichtung mindestens eine Positions-Bestimmungseinheit (36) aufweist, welche ausgebildet ist, eine aktuelle Position mindestens zweier an einem Anhänger (60) vorgegebener Bereiche (91-94) zu erfassen, **dadurch gekennzeichnet, dass** alle vorgegebenen Bereiche (91-94) auf dem Dach und/oder der Dachkonstruktion angeordnet sind, insbesondere dreiecksförmig.

2. Anhänger-Steuervorrichtung(10) nach Anspruch 1, wobei eine der mindestens zwei vorgegebenen Bereiche (91-94) im Bereich oder in der Anhänger-Steuervorrichtung (10) angeordnet ist.

3. Anhänger-Steuervorrichtung (10) nach einem der vorhergehenden Ansprüche, wobei die Positions-Bestimmungseinheit (36) als eine GPS-Einheit oder als eine GPRS-Einheit zum Abfragen einer aktuellen Position mittels GPS oder GPRS oder zur Kommunikation mit lokalen Sendemasten ausgebildet ist, wobei insbesondere auch vergleichbare Methoden zur Lokalisierung verwendbar sind.

4. Anhänger-Steuervorrichtung (10) nach einem der vorhergehenden Ansprüche , wobei eine aktuell erfasste Position (91, 92, 93, 94) mindestens drei Ortskoordinaten, insbesondere eine Höhenkoordinate umfasst, welche einen Abstand zu einer Erdoberfläche angibt.

5. Anhänger-Steuervorrichtung (10) nach einem der vorhergehenden Ansprüche, welche eine Auswerteeinheit (37) zum Auswerten der erfassten Positionen (91, 92, 93, 94) aufweist.

6. Anhänger (60, 60a) mit einer Anhänger-Steuervorrichtung (10) nach einem der Ansprüche 1 bis 5, zum Bestimmen einer aktuellen Position und/oder einer Ausrichtung des Anhängers (60, 60a) zur Unterstützung eines Kupplungsprozesses mit einer Zugmaschine (64), wobei
- der Anhänger mindesten zwei vorgegebene Bereiche (91-94) aufweist, welche beanstandet voneinander angeordnet sind, und
- die Anhänger-Steuervorrichtung (10) eine Positions-Bestimmungseinheit (36) umfasst, wobei
- die Positions-Bestimmungseinheit (36) dazu ausgebildet ist, eine aktuelle Position der mindestens zwei vorgegebenen Bereiche (91-94) zu erfassen, um eine Ausrichtung des Anhängers (60) und/oder der Anhänger-Steuervorrichtung (10) in Relation zu dem Anhänger (60) zu bestimmen.

7. Anhänger (60, 60a) nach Anspruch 6, wobei die Anhänger-Steuervorrichtung (10) dazu ausgebildet ist, aktuelle Positionen der mindestens zwei vorgegebenen Bereiche (91-94), insbesondere in einer Datenbank, abzufragen, welche der aktuellen Position und/oder der Ausrichtung der Anhänger-Steuervorrichtung (10) an dem Anhänger (60, 60a) zugeordnet sind, und einer Auswerteeinheit (37) zu übergeben, wobei
die Auswerteeinheit (37) dazu ausgebildet ist, aus den aktuellen Positionen eine Ausrichtung des Anhängers (60,60a) zu bestimmen, um einen Kupplungsprozess mit einer Zugmaschine (64) zu unterstützen.

8. Anhänger nach Anspruch 6 oder 7, wobei der Anhänger (60, 60a) an den vorgegebenen Bereichen (91-94) jeweils eine Sende- und Empfängereinheit (22, 30) umfasst, welche jeweils die aktuelle Position, insbesondere die Koordinaten, abfragt und der Positions-Bestimmungseinheit (36) übergibt, wobei insbesondere jede Sende- und Empfängereinheit (22, 30) der Positions-Bestimmungseinheit (36) einen Identifikationscode zur eindeutigen Überprüfung der Zuordnung zu dem entsprechenden Anhänger (60, 60a) übergibt.

9. Anhänger nach Ansprüche 8, wobei jede Sende- und Empfangseinheit (22, 30) an einer festen Positions- bzw. einem festen Bereich an dem Anhänger angebracht ist.

10. Anhänger (60, 60a) nach einem der vorhergehenden Ansprüche 6-9, wobei die Auswerteeinheit (37) eine Höhe des Anhängers (60, 60a) über der Erdoberfläche bestimmt, um zu bestimmen, ob ein Ankuppeln einer Zugmaschine (64) an den Anhänger (60, 60a) erfolgen kann.

11. Anhänger (60, 60a) nach einem der vorhergehenden Ansprüche 6-10, wobei zu jedem vorgegebenen Bereich (91-94) eine relative Lage zu einem Königszapfen (62) des Anhängers (60, 60a) in der Auswerteeinheit (37) hinterlegbar oder hinterlegt ist.

12. Ankupplungssystem umfassend eine Zugmaschine (64) und einen Anhänger (60, 60a) gemäß einem der vorhergehenden Ansprüche 6-11 mit einer Anhänger-Steuervorrichtung (10), nach einem der Ansprüche 1-5, wobei die Zugmaschine (64) mindestens eine Steuereinheit umfasst, welche ausbildet ist, mit der Anhänger-Steuervorrichtung (10) zur Abfrage einer aktuellen Position und/oder einer Ausrichtung in Bezug auf den Anhänger (60, 60a) zu kommunizieren und wobei die Steuereinheit ausgebildet ist, entsprechende Einstellungen an der Zugmaschine (64) vorzunehmen, um einen, insbesondere automatischen, Kupplungsprozess zwischen der Zugmaschine (64) und dem Anhänger (60, 60a) durchzuführen.

13. Ankupplungssystem nach Anspruch 12, wobei die entsprechenden Einstellungen Radeinstellungen der Zugmaschine (64) umfassen, insbesondere Winkeleinstellungen in Bezug auf eine Achse der Zugmaschine (64) und/oder einem Abstand zu dem Königszapfen (62) des anzukuppelnden Anhängers (60, 60a).

14. Ankupplungssystem nach einem der Ansprüche 11 bis 13, wobei die Zugmaschine (64) selbstfahrend ausgebildet ist und die ausgewerteten vorgegebenen Bereiche (91-94) und/oder die relative Lage des Königszapfens (62) automatisch zur Durchführung des Kupplungsvorganges mit dem Anhänger (60, 60a) ansteuert, wobei insbesondere die Zugmaschine (64) ein Erfassungssystem zur Erfassung einer Umgebung auf einer Ankopplungsseite der Zugmaschine (64) aufweist.

15. Verfahren zum Durchführen eines Kupplungsprozesse zwischen einer Zugmaschine (64) und einem Anhänger (60, 60a) mit einem Ankupplungssystem nach einem der Ansprüche 12-14, wobei das Ankupplungssystem eine Zugmaschine (64) und einen Anhänger (60, 60a) umfasst, wobei
- an dem Anhänger (60, 60a) eine Anhänger-Steuervorrichtung (10) zum Abfragen und Auswerten einer aktuellen Position und Ausrichtung des Anhängers (60, 60a) angeordnet ist, und
- die Anhänger-Steuervorrichtung (10) eine Auswerteeinheit (37) zum Auswerten und Übergeben der aktuellen Position und Ausrichtung an eine Steuereinheit der Zugmaschine (64) aufweist, wobei das Verfahren folgende Schritte umfasst:
- Bestimmen einer Ausrichtung des Anhängers (60, 60a) durch Auswerten einer Achse oder einer Ebene durch mindestens zwei oder mindestens drei erfasste aktuelle Positionen von vorgegebenen Bereichen an dem Anhänger (60, 60a),
- Übersenden der aktuellen Positionen und der Ausrichtung des Anhängers (60, 60a) an eine Steuereinheit der Zugmaschine (64), insbesondere mittels einer Drahtlosverbindung,
- Ansteuern der aktuellen Position und der Ausrichtung des Anhängers (60, 60a) durch die Zugmaschine (64) zur Durchführung eines, insbesondere automatischen, Kupplungsprozesses.

## Claims

1. A trailer controller (10) for mounting on a trailer (60), wherein the trailer controller (10) has at least one position-determining unit (36) which is designed to detect a current position of at least two regions (91-94) predefined on a trailer (60), in order to determine a current position and an alignment, **characterised by** all the predefined regions (91-94) are arranged on the roof and/or the roof structure, in particular in a triangular shape.

2. The trailer controller (10) as claimed in claim 1, wherein one of the at least two predefined regions (91-94) is arranged in the vicinity or in the trailer controller (10).

3. The trailer controller (10) as claimed in one of the preceding claims, wherein the position-determining unit (36) is embodied as a GPS unit or as a GPRS unit for interrogating a current position by means of GPS or GPRS or for communicating with local transmission masts, wherein, in particular, comparable methods for determining locations can also be used.

4. The trailer controller (10) as claimed in one of the preceding claims, wherein a currently detected position (91, 92, 93, 94) comprises at least three spatial coordinates, in particular a height coordinate which indicates a distance from the surface of the Earth.

5. The trailer controller (10) as claimed in one of the preceding claims, which has an evaluation unit (37) for evaluating the detected positions (91, 92, 93, 94).

6. A trailer (60, 60a) having a trailer controller (10), as claimed in one of claims 1 to 5, for determining a current position and/or an alignment of the trailer (60, 60a) in order to assist a coupling process to a tractor unit (64), wherein
- the trailer has at least two predefined regions (91-94) which are arranged spaced apart from one another, and,
- the trailer controller (10) comprises a position-determining unit (36), wherein
- the position-determining unit (36) is designed to detect a current position of the at least two predefined regions (91-94) in order to determine an alignment of the trailer (60) and/or of the trailer controller (10) in relation to the trailer (60).

7. The trailer (60, 60a) as claimed in claim 6, wherein the trailer controller (10) is designed to interrogate current positions of the at least two predefined regions (91-94), in particular in a database, which regions (91-94) are assigned to the current position and/or to the alignment of the trailer controller (10) on the trailer (60, 60a), and to transfer said positions to an evaluation unit (37), wherein
the evaluation unit (37) is designed to determine an alignment of the trailer (60, 60a) from the current positions, in order to assist a process of coupling to a tractor unit (64).

8. The trailer as claimed in claim 6 or 7, wherein the trailer (60, 60a) comprises, at each of the predefined regions (91-94), a transceiver unit (22, 30) which respectively interrogates the current position, in particular the coordinates, and transfers them to the position-determining unit (36), wherein in particular each transceiver unit (22, 30) transfers an identification code to the position-determining unit (36) in order to unambiguously check the assignment to the corresponding trailer (60, 60a).

9. The trailer as claimed in claim 8, wherein each transceiver unit (22, 30) is attached to a fixed position or a fixed region on the trailer.

10. The trailer (60, 60a) as claimed in one of the preceding claims 6-9, wherein the evaluation unit (37) determines the height of the trailer (60, 60a) above the surface of the Earth, in order to determine whether a tractor unit (64) can be coupled to the trailer (60, 60a).

11. The trailer (60, 60a) as claimed in one of the preceding claims 6-10, wherein for each predefined region (91-94) a relative position with respect to a kingpin (62) of the trailer (60, 60a) can be stored in the evaluation unit (37).

12. A coupling system comprising a tractor unit (64) and a trailer (60, 60a) as claimed in one of the preceding claims 6-11 having a trailer controller (10), as claimed in one of claims 1-5, wherein the tractor unit (64) comprises at least one control unit which is designed to communicate with the trailer controller (10) in order to interrogate a current position and/or an alignment with respect to the trailer (60, 60a), and wherein the control unit is designed to make corresponding adjustments at the tractor unit (64), in order to carry out an in particular automatic coupling process between the tractor unit (64) and the trailer (60, 60a).

13. The coupling system as claimed in claim 12, wherein the corresponding adjustments comprise wheel adjustments of the tractor unit (64), in particular angular adjustments with respect to an axis of the tractor unit (64) and/or distance from the kingpin (62) of the trailer (60, 60a) which is to be coupled.

14. The coupling system as claimed in one of claims 11 to 13, wherein the tractor unit (64) is of self-propelling design, and automatically actuates the evaluated predefined regions (91-94) and/or the relative position of the kingpin (62) to carry out the process of coupling to the trailer (60, 60a), wherein, in particular, the tractor unit (64) has a detection system for detecting the surroundings on a coupling side of the tractor unit (64).

15. A method for carrying out a coupling process between a tractor unit (64) and a trailer (60, 60a) with a coupling system, as claimed in one of claims 11-14, wherein the coupling system comprises a tractor unit (64) and a trailer (60, 60a), in particular as claimed in one of claims 6-11, wherein
- a trailer controller (10) for interrogating and evaluating a current position and alignment of the trailer (60, 60a) is arranged on the trailer (60, 60a), and
- the trailer controller (10) has an evaluation unit (37) for evaluating and transferring the current position and alignment to a control unit of the tractor unit (64), wherein the method comprises the following steps:
- determining an alignment of the trailer (60, 60a) by evaluating an axis or a plane through at least two or at least three detected current positions of predefined regions on the trailer (60, 60a),
- transmitting the current position and the alignment of the trailer (60, 60a) to a control unit of the tractor unit (64), in particular by means of a wireless connection,
- actuation of the current position and the alignment of the trailer (60, 60a) by the tractor unit (64) in order to carry out an in particular automatic coupling process.

## Revendications

1. Dispositif de commande de remorque (10) destiné à être monté sur une remorque (60), le dispositif de commande de remorque (10) comprenant au moins une unité de détermination de position (36) adaptée pour déterminer une position actuelle et une orientation et réalisée pour détecter une position actuelle d'au moins deux zones prédéterminées (91 - 94) sur une remorque (60),
**caractérisé en ce que**
toutes les zones prédéterminées (91 - 94) sont disposées sur le toit et/ou sur la construction de toit, en particulier en disposition triangulaire.

2. Dispositif de commande de remorque (10) selon la revendication 1, dans lequel
l'une desdites au moins deux zones prédéterminées (91 - 94) est située au niveau du ou dans le dispositif de commande de remorque (10).

3. Dispositif de commande de remorque (10) selon l'une des revendications précédentes, dans lequel
l'unité de détermination de position (36) est réalisée sous la forme d'une unité GPS ou d'une unité GPRS pour l'interrogation d'une position actuelle au moyen du GPS ou du GPRS ou pour la communication avec des mâts d'émission locaux, en particulier des méthodes comparables de localisation pouvant également être utilisées.

4. Dispositif de commande de remorque (10) selon l'une des revendications précédentes, dans lequel
une position actuellement détectée (91, 92, 93, 94) comprend au moins trois coordonnées locales, en particulier une coordonnée d'altitude, qui indique une distance par rapport à une surface terrestre.

5. Dispositif de commande de remorque (10) selon l'une des revendications précédentes, qui possède une unité d'évaluation (37) pour évaluer les positions détectées (91, 92, 93, 94).

6. Remorque (60, 60a) comportant un dispositif de commande de remorque (10) selon l'une des revendications 1 à 5, pour déterminer une position actuelle et/ou une orientation de la remorque (60, 60a) pour soutenir un processus d'attelage avec un véhicule tracteur (64), dans laquelle
- la remorque comporte au moins deux zones prédéterminées (91 - 94) qui sont disposées en étant espacées l'une de l'autre, et
- le dispositif de commande de remorque (10) comprend une unité de détermination de position (36),
- l'unité de détermination de position (36) est réalisée pour détecter une position actuelle desdites au moins deux zones prédéterminées (91 - 94) afin de déterminer une orientation de la remorque (60) et/ou du dispositif de commande de remorque (10) par rapport à la remorque (60).

7. Remorque (60, 60a) selon la revendication 6, dans laquelle
le dispositif de commande de remorque (10) est réalisé pour interroger les positions actuelles desdites au moins deux zones prédéterminées (91 - 94), en particulier dans une base de données, qui sont associées à la position actuelle et/ou à l'orientation du dispositif de commande de remorque (10) sur la remorque (60, 60a), et pour les transmettre à une unité d'évaluation (37),
l'unité d'évaluation (37) est réalisée pour déterminer une orientation de la remorque (60, 60a) à partir des positions actuelles afin de soutenir un processus d'attelage avec un véhicule tracteur (64).

8. Remorque selon la revendication 6 ou 7, dans laquelle
la remorque (60, 60a) comprend, au niveau des zones prédéterminées (91 - 94), une unité d'émission et de réception (22, 30) qui interroge la position actuelle respective, en particulier les coordonnées, et la transmet à l'unité de détermination de position (36), et
en particulier, chaque unité d'émission et de réception (22, 30) transmet à l'unité de détermination de position (36) un code d'identification pour vérifier sans équivoque l'affectation à la remorque correspondante (60, 60a).

9. Remorque selon la revendication 8, dans laquelle
chaque unité d'émission et de réception (22, 30) est montée à une position ou une zone fixe sur la remorque.

10. Remorque (60, 60a) selon l'une des revendications précédentes 6 à 9, dans laquelle
l'unité d'évaluation (37) détermine une hauteur de la remorque (60, 60a) au-dessus de la surface terrestre pour déterminer si un attelage d'un véhicule tracteur (64) à la remorque (60, 60a) peut avoir lieu.

11. Remorque (60, 60a) selon l'une des revendications précédentes 6 à 10, dans laquelle
pour chaque zone prédéterminée (91 - 94), une position relative à un pivot d'attelage (62) de la remorque (60, 60a) peut être mémorisée ou est mémorisée dans l'unité d'évaluation (37).

12. Système d'attelage comprenant un véhicule tracteur (64) et une remorque (60, 60a) selon l'une des revendications précédentes 6 à 11, comportant un dispositif de commande de remorque (10) selon l'une des revendications 1 à 5, dans lequel
le véhicule tracteur (64) comprend au moins une unité de commande qui est réalisée pour communiquer avec le dispositif de commande de remorque (10) pour interroger une position actuelle et/ou une orientation par rapport à la remorque (60, 60a), et
l'unité de commande est réalisée pour effectuer des réglages correspondants sur le véhicule tracteur (64) afin d'effectuer un processus d'attelage, en particulier automatique, entre le véhicule tracteur (64) et la remorque (60, 60a).

13. Système d'attelage selon la revendication 12, dans lequel
les réglages correspondants incluent des réglages de roues du véhicule tracteur (64), en particulier des réglages angulaires par rapport à un essieu du véhicule tracteur (64) et/ou par rapport à une distance par rapport au pivot d'attelage (62) de la remorque (60, 60a) à atteler.

14. Système d'attelage selon l'une des revendications 11 à 13, dans lequel
le véhicule tracteur (64) est réalisé pour être automoteur et pilote automatiquement les zones prédéterminées évaluées (91 - 94) et/ou la position relative du pivot d'attelage (62) pour effectuer le processus d'attelage avec la remorque (60, 60a), et
en particulier le véhicule tracteur (64) comporte un système de détection pour détecter un environnement sur un côté d'attelage du véhicule tracteur (64).

15. Procédé pour mettre en œuvre un processus d'attelage entre un véhicule tracteur (64) et une remorque (60, 60a) avec un système d'attelage selon l'une des revendications 12 à 14, dans lequel le système d'attelage inclut un véhicule tracteur (64) et une remorque (60, 60a), et
- un dispositif de commande de remorque (10) est disposé sur la remorque (60, 60a) pour interroger et évaluer une position et une orientation actuelles de la remorque (60, 60a), et
- le dispositif de commande de remorque (10) comporte une unité d'évaluation (37) pour évaluer et transmettre la position et l'orientation actuelles à une unité de commande du véhicule tracteur (64),
le procédé comprenant les étapes suivantes consistant à :
- déterminer une orientation de la remorque (60, 60a) en évaluant un axe ou un plan par au moins deux ou au moins trois positions actuelles détectées de zones prédéterminées sur la remorque (60, 60a),
- transmettre les positions actuelles et l'orientation de la remorque (60, 60a) à une unité de commande du véhicule tracteur (64), en particulier au moyen d'une connexion sans fil,
- piloter la position actuelle et l'orientation de la remorque (60, 60a) par le véhicule tracteur (64) pour effectuer un processus d'attelage, en particulier automatique.
